# DEMANDE DE BREVET EUROPEEN

(11) **EP 0 764 917 A1**
(43) Date de publication de la demande: **26.03.1997**
(21) Numéro de dépôt: 95490029.6
(22) Date de dépôt: 22.09.1995
(51) Int. Cl.: G06K 11/18

(54) **Surface de déplacement d'un dispositif associé à un pointeur d'ordinateur**

(71) Demandeur: DUPONT S.A.R.L., 59000 Lille (nord) (FR)
(72) Inventeur: Dupont, Jean-Louis, F-59000 Lille (FR)
(74) Mandataire: Duthoit, Michel

(57) **Abrégé**

Surface de déplacement d'un dispositif associé à un pointeur d'un ordinateur, apte à être disposée sur une surface de travail.

Selon l'invention, elle comprend au moins une couche (2) d'un matériau support souple et recouverte au moins partiellement sur l'une de ses faces (3) par une couche d'un matériau adhésif (4) et, sur l'autre de ses faces par une couche de vernis texturé (6).

## Description

La présente invention a pour objet une surface, apte à être disposée sur une surface de travail, destinée à permettre le déplacement d'un dispositif associé à un pointeur d'un écran d'ordinateur. Elle trouvera son application dans tous les secteurs de l'activité économique dans lesquels on utilise des ordinateurs qui comportent de tels pointeurs ainsi que chez les fabricants de telles surfaces.

Actuellement, on utilise fréquemment un dispositif, plus communément appelé "souris", associé à un écran d'ordinateur et qui a pour fonction de contrôler un pointeur permettant la visualisation d'informations déterminées sur l'écran de l'ordinateur.

Plus précisément, lorsque l'on déplace la "souris" sur un plan de travail, ce déplacement est directement répercuté au niveau du pointeur de l'écran de l'ordinateur de manière à permettre de placer le pointeur en vis-à-vis d'informations déterminées. Cette correspondance des déplacements résulte d'une transformation du mouvement linéaire en abscisse et en ordonnée de la "souris" par rapport au plan de travail qui est converti en un mouvement de rotation résultant du déplacement d'un élément sphérique associé au corps de la "souris", ce mouvement de rotation étant ensuite converti pour être utilisé par les moyens de traitement de l'ordinateur en vue d'obtenir le résultat recherché.

Il faut donc que la surface de travail présente un aspect de surface adapté de manière à assurer un déplacement approprié de la "souris" et, de ce fait, elle ne doit pas comporter trop d'irrégularités, ou bien être trop lisse, si l'on désire obtenir une précision satisfaisante au niveau du fonctionnement du pointeur de l'ordinateur.

C'est la raison pour laquelle, actuellement, on a pensé à réaliser des surfaces de déplacement qui présentent des formes et des dimensions variables en fonction des besoins, mais qui généralement ne sont pas toujours adaptés aux utilisations désirées, notamment en ce qui concerne leur maintien sur la surface de travail, ou enü raison notamment de leur épaisseur souvent importante ou de la nature du matériau dans lequel elles sont réalisées.

En ce qui concerne la nature et la structure de la surface extérieure de telles surfaces de déplacement, on a par exemple pensé à utiliser des matériaux qui présentent un aspect de surface granuleux de manière à faciliter le déplacement de la "souris" tout en conférant une précision satisfaisante au niveau du pointeur.

Toutefois, de tels matériaux sont souvent d'un prix de revient élevé, et ils ne peuvent pas toujours être imprimés, ce qui en limite les possibilités d'utilisation, notamment dans le cas de la réalisation de produits présentant un caractère esthétique ou publicitaire.

Il faut par ailleurs noter que de telles surfaces de déplacement sont généralement d'une épaisseur relativement importante et leur maintien sur la surface de travail n'est pas toujours aisé, ce qui peut poser des problèmes d'utilisation générant une perte de précision du travail effectué.

La présente invention a pour objet de proposer une surface destinée à permettre le déplacement d'un dispositif, tel qu'une "souris", associée à un pointeur d'un écran d'ordinateur, qui remédie à tous ces inconvénients en présentant un état de surface permettant d'assurer un déplacement précis de la "souris" et donc du pointeur tout en étant d'une épaisseur réduite et d'une mise en place aisée quelles que soient les conditions d'utilisation.

Un autre avantage de la surface de déplacement conforme à l'invention réside dans le fait qu'elle peut être fabriquée en série pour un coût modique tout en pouvant présenter des informations imprimées.

Un autre avantage de la présente invention est de proposer une surface de déplacement qui peut être réalisée à partir de matériaux variés aptes à être associés à un support adhésif de manière à permettre son maintien sur la surface de travail.

D'autres buts et avantages de la présente invention apparaîtront au cours de la description qui va suivre qui n'est donnée qu'à titre indicatif et qui n'a pas pour but de la limiter.

A cet effet, la surface de déplacement d'un dispositif associé à un pointeur d'ordinateur, apte à être disposée sur une surface de travail, est caractérisée par le fait qu'elle comprend au moins une couche d'un matériau support souple recouvert au moins partiellement sur l'une de ses faces par une couche d'un matériau adhésif et, sur l'autre de ses faces, par une couche d'un vernis texturé.

L'invention sera mieux comprise à la lecture de la description suivante accompagnée des dessins en annexe parmi lesquels :
- la figure 1 est une vue en coupe schématique qui illustre une première forme de réalisation de la structure d'une surface de déplacement conforme à l'invention,
- la figure 2 est une vue en coupe qui illustre une seconde forme de réalisation de la structure d'une surface de déplacement conforme à l'invention,
- la figure 3 est une vue en coupe qui représente la structure d'une troisième forme de réalisation d'une surface conforme à l'invention.

La présente invention a pour objet une surface de déplacement d'une "souris" associée à un pointeur d'ordinateur qui trouvera son application dans tous les secteurs de l'activité économique dans lesquels on utilise des ordinateurs qui comportent un pointeur et une "souris", ainsi que chez les fabricants de telles surfaces.

Actuellement, il est courant d'utiliser une "souris" que l'on déplace sur un plan de travail et dont le déplacement est directement répercuté au niveau du pointeur de l'écran.

Or, pour assurer une précision au niveau du pointeur, il faut que l'on déplace la "souris" sur une surface de déplacement qui présente des propriétés satisfaisantes. C'est la raison pour laquelle on a pensé à réaliser des surfaces de déplacement de formes et de dimensions variées dont la face externe présente un aspect granuleux pour permettre un meilleur déplacement de la "souris".

Toutefois, en pratique, de telles surfaces n'apportent pas toujours satisfaction et, en outre, elles sont souvent d'une épaisseur relativement importante, et elles n'offrent pas toujours la possibilité d'être correctement maintenues sur la surface de travail, ce qui est préjudiciable au résultat escompté.

Dans toute la description qui va suivre, et afin d'en faciliter la compréhension, les éléments communs entre les différentes formes de réalisation illustrées seront repérés avec les mêmes références.

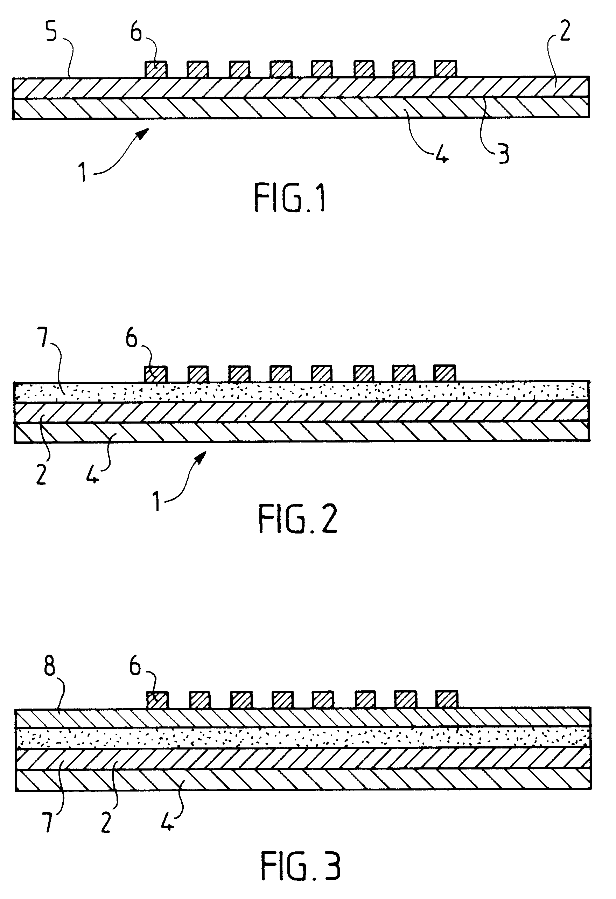

En se référant à la figure 1, on voit une forme de réalisation d'une structure d'une surface 1 de déplacement conforme à l'invention qui comprend une couche 2 d'un matériau support souple et flexible dont sa face inférieure 3 est recouverte ici notamment en totalité par une couche 4 d'un matériau adhésif et dont sa face supérieure 5 est recouverte au moins partiellement par une couche d'un vernis texturé.

Plus précisément, en ce qui concerne la couche 2, il peut s'agir, en fonction des besoins et/ou des applications, soit d'une couche de papier présentant une épaisseur et des propriétés adaptées, soit d'une couche d'un matériau vinyle ou bien encore d'une couche de polyester inerte ou tout autre matériau approprie.

Cette couche 2 présente, en outre, une faible épaisseur de manière à permettre la réalisation de surface 1 de déplacement d'épaisseur réduite, ce qui facilite son utilisation quelles que soient les conditions de mise en oeuvre tout en lui conférant une rigidité suffisante pour de telles applications.

La couche 4 est par exemple une couche d'un matériau adhésif du type enlevable, adapté en fonction de la nature de la couche 2, et qui présente des propriétés permettant d'assurer un maintien efficace de la surface de déplacement 1 sur le plan de travail.

Il peut par exemple s'agir dans le cas d'un support 2 en papier, d'une couche d'un adhésif, présentant des propriétés de résistance à l'humidité et aux agents extérieurs, imprimable commercialisé par la Société 3M sous la marque "SCOTCKMARK - POST-IT".

En ce qui concerne la couche 6, elle est obtenue par impression, par des techniques de sérigraphie classiques, avec séchage U.V. par exemple, et elle présente un état de surface ayant une granulométrie variable de manière à permettre un déplacement de la "souris" conférant une précision au pointage. C'est ainsi que l'on a obtenu de bons résultats avec un état de surface présentant une granulométrie d'au moins 12 microns.

Le vernis texturé utilisé peut, par exemple, être un vernis Réf 418 - ULTRATEC commercialisé par la Société SERICOL qui résiste aux agents extérieurs et aux solvants tout en étant compatible avec les différents matériaux constituant la structure 1.

Selon l'invention, l'on obtient un état de surface compatible avec de telles utilisations par une technique de sérigraphie dont la mise en oeuvre autorise la fabrication en série de surface 1 de déplacement de formes et de dimensions variables en fonction des besoins et pour un prix de fabrication compatible avec de tels produits.

Par ailleurs, on voit, dans une variante de réalisation, comme celle qui est plus particulièrement illustrée à la figure 2, que l'on peut prévoir la mise en place d'une couche 7 d'encre d'impression entre la couche 2 et la couche 6 ou bien, dans une autre forme de réalisation, comme celle illustrée à la figure 3, que l'on peut également envisager la mise en place d'une couche 8, disposée entre la couche 7 et la couche 6 qui a pour fonction d'assurer une protection du matériau support 2 et de son impression, et également d'accroître la résistance de la structure.

Cette couche 8 peut, par exemple, être constituée par une couche de polyester ou de polycarbonate ou de tout autre matériau adapté.

A titre d'exemple, on a obtenu de bons résultats avec les structures suivantes :

### EXEMPLE 1 :

| | | |
|---|---|---|
| - | IMPRESSION RELIEF-ENCRE TEXTUREE-REF.418 ULTRATEC EPAISSEUR- | 48 microns |
| - | IMPRESSION 3 COULEURS-ENCRE U.V.-REF.U V N EPAISSEUR- | 36 microns |
| - | PAPIER BLANC LITHO-REF.3M7113 EPAISSEUR- | 102 microns |
| - | ADHESIF POSTIT 3MREPOSITIONNABLE EPAISSEUR- | 51 microns |
| | TOTAL du complexe | 237 microns |
| | PAPIER ANTI-ADHERENT IMPRIME-POSTIT | 74 microns |

### EXEMPLE 2 :

| | | |
|---|---|---|
| - | IMPRESSION RELIEF-ENCRE TEXTUREE-REF.418 EPAISSEUR- | 48 microns |
| - | FILMS POLYESTER TRANSPARENT-REF.3M7350 EPAISSEUR- | 51 microns |
| - | ADHESIF ACRYLIQUE HAUTE PERFORMANCE REF.300 EPAISSEUR- | 20 microns |
| - | IMPRESSION 3 COULEURS ENCRE U.V.-REF.U.V.N. EPAISSEUR- | 36 microns |
| - | FILMS VINYL BLANC 3M.REF 7600 EPAISSEUR- | 102 microns |
| - | ADHESIF ENLEVABLE HAUTE STABILITE ACRYLIQUE 3M500 EPAISSEUR- | 25 microns |
| | TOTAL du complexe | 282 microns |
| | PAPIER ANTI ADHERENT | 64 microns |

Tout naturellement, en fonction des besoins ou des applications, on peut prévoir une structure, une surface de déplacement conforme à l'invention qui présente des dimensions variées, et/ou un nombre de couches dont le positionnement et les dimensions sont variables de manière à obtenir une surface permettant un déplacement de la "souris" conférant une précision optimale au pointage.

Bien entendu, l'invention ne se limite pas à la seule forme de réalisation qui a été décrite ci-dessus, mais au contraire, elle embrasse toutes les variantes de réalisation.

## Revendications

1. Surface de déplacement d'un dispositif associé à un pointeur d'un ordinateur, apte à être disposée sur une surface de travail, caractérisée en ce qu'elle comprend au moins une couche (2) d'un matériau support souple recouverte au moins partiellement sur l'une de ses faces (3) par une couche d'un matériau adhésif (4) et, sur l'autre de ses faces (5), par une couche d'un vernis texturé (6).

2. Surface de déplacement selon la revendication 1, caractérisée en ce que la couche de vernis texturé (6) est disposée par sérigraphie sur au moins l'une des parties de la surface du matériau support.

3. Surface de déplacement selon la revendication 1, caractérisée en ce qu'elle comprend au moins une couche d'une encre d'impression (7) disposée entre la couche de matériau support (2) et la couche de vernis (6).

4. Surface de déplacement selon la revendication 1, caractérisée en ce qu'elle comprend au moins une couche de protection (8) disposée entre la couche d'impression (7) et la couche de vernis (6).

5. Surface de déplacement selon la revendication 1, caractérisée en ce que la couche de matériau support (2) est constituée par une couche de papier.

6. Surface de déplacement selon la revendication 1, caractérisée en ce que la couche de matériau support (2) est constituée par une couche de vinyle.

7. Surface de déplacement selon la revendication 1, caractérisée en ce que la couche de matériau support (2) est constituée par une couche de polyester.

8. Surface de déplacement selon la revendication 1, caractérisée en ce qu'elle présente un état de surface présentant une granulométrie d'au moins 12 microns.

9. Surface de déplacement selon la revendication 4, caractérisée en ce que la couche de protection (8) est constituée par du polyester ou du polycarbonate.
